Europäisches Patentamt

European Patent Office

Office européen des brevets

(11) Numéro de publication: **0 326 473**
**A1**

## (12) DEMANDE DE BREVET EUROPEEN

(21) Numéro de dépôt: **89400186.6**

(22) Date de dépôt: **24.01.89**

(51) Int. Cl.⁴: **A 44 B 11/00**
**F 16 B 2/24**

(30) Priorité: **25.01.88 FR 8800779**

(43) Date de publication de la demande:
**02.08.89 Bulletin 89/31**

(84) Etats contractants désignés:
**AT BE CH DE ES FR GB GR IT LI LU NL SE**

(71) Demandeur: **Combeau, André J.P.**
**12, Résidence "La Forêt"**
**F-95160 Montmorency (FR)**

(72) Inventeur: **Combeau, André J.P.**
**12, Résidence "La Forêt"**
**F-95160 Montmorency (FR)**

(74) Mandataire: **Chambon, Gérard**
**Cabinet Chambon 6 et 8 avenue Salvador Allende**
**F-93804 Epinay-sur-Seine Cédex (FR)**

(54) Procédé et système de fixation d'une attache sur une sangle en élastomère.

㊐ L'invention concerne un procédé et un système de fixation d'une attache (7) sur une sangle (1) en élastomère.

Le système de fixation selon l'invention est remarquable en ce qu'il comporte une pince de serrage (3), élastique, prévue pour venir coiffer un repli aménagé à l'extrémité de la sangle (1) autour d'un axe cylindrique (2) qui est solidaire de l'attache (7) à fixer.

Le système selon l'invention permet notamment de régler la longueur utile de la sangle et de changer à volonté le type d'attache selon l'utilisation.

Fig. 2

EP 0 326 473 A1

## Description

### Procédé et système de fixation d'une attache sur une sangle en élastomère

L'invention concerne un procédé et un système de fixation d'une attache sur une sangle en élastomère.

L'invention concerne toute industrie ou artisanat qui utilise des sangles en élastomère travaillant en extension. A titre d'exemples non limitatifs, de telles sangles peuvent servir par exemple de moyens de retenue et d'arrimage d'objets, par exemple dans ou sur des véhicules, de moyens de tirage et de tension pour le bâchage de véhicules, de moyens de suspension, de moyens amortisseurs, de moyens élastiques de rappel, de tendeurs, etc. L'une des applications particulièrement avantageuse concerne les conteneurs à roulettes, qui possèdent des faces grillagées qu'il s'agit de maintenir élastiquement.

Le mot "élastomère" doit être compris comme le nom générique des matériaux doués d'élasticité caoutchoutique et dont l'origine peut être naturelle ou synthétique. Il peut par conséquent s'agir d'un caoutchouc naturel ou d'un produit entièrement artificiel.

Les attaches ou moyens d'accrochage dont est généralement pourvue une sangle sont traditionnellement rendus solidaires de ladite sangle par la technique de surmoulage, ou par vulcanisation, ou encore par assujettissement mécanique du type rivetage.

Toutes ces opérations sont généralement onéreuses et nécessitent des machines spéciales.

En outre, chaque sangle ainsi équipée est destinée a un usage bien particulier du fait de sa longueur invariable empêchant tout réglage et à cause du ou des moyens d'accrochage dont elle est munie, lesquels sont fixés définitivement.

C'est pourquoi l'inventeur a imaginé un système simple, peu onéreux, qui permet en outre un reglage de la longueur et une interchangeabilité des moyens d'accrochage.

L'invention propose un procédé de fixation d'une attache à l'extrémité d'une sangle en élastomère qui est remarquable en ce qu'il consiste, à partir d'une bande plate en élastomère, à replier l'extrémité de ladite bande autour d'un axe cylindrique qui est solidaire de l'attache à fixer et à coiffer le repli ainsi formé par une pince de serrage, élastique.

L'invention propose aussi un système de fixation pour la mise en oeuvre du procédé qui est remarquable en ce qu'il comporte une pince de serrage, élastique, prévue pour venir coiffer un repli aménagé à l'extrémité de la sangle autour d'un axe cylindrique qui est solidaire de l'attache à fixer.

La pièce de serrage est par exemple du type connu sous l'appellation "pince à dessins". Selon un mode de réalisation préféré, la pince de serrage présente un dos arrondi reliant deux ailes qui se resserrent l'une vers l'autre et qui sont terminées chacune par une lèvre arrondie s'enroulant vers l'extérieur.

Avantageusement la pince de serrage est en acier traité et l'attache en métal ou en matière plastique dure.

Ainsi, il est clair que le système selon l'invention permet d'ajuster la longueur de la sangle par découpe de la bande ou plus simplement par déplacement de la zone du repli, après desserrage de la pince, comme il sera expliqué ci-après.

Il est en outre possible de changer l'attache selon les besoins, celle-ci comportant un moyen d'accrochage dont le profil est adapté à la pièce à laquelle la sangle doit s'accrocher.

Selon un mode de réalisation l'axe cylindrique autour duquel est aménagé le repli de la sangle est d'une seule pièce avec le moyen d'accrochage.

Dans ce cas, selon un mode de réalisation tout à fait original, l'attache comporte en outre une poignée de traction qui est montée de manière articulée sur l'axe cylindrique du moyen d'acrochage.

D'une manière similaire selon un autre mode de réalisation, c'est la poignée de traction qui est munie de l'axe cylindrique autour duquel est aménagé le repli de la sangle, tandis que le moyen d'accrochage est articulé sur l'axe de ladite poignée.

L'invention sera bien comprise à la lecture de la description qui va suivre et qui se réfère aux dessins annexés dans lesquels:

- la figure 1 montre en élévation et coupe partielle l'extrémité d'une sangle équipée d'un système selon l'invention,
- les figures 2 et 3 montrent une application particulière, la figure 2 correspondant à la figure 1 et la figure 3 étant une vue de dessus de la figure 2.

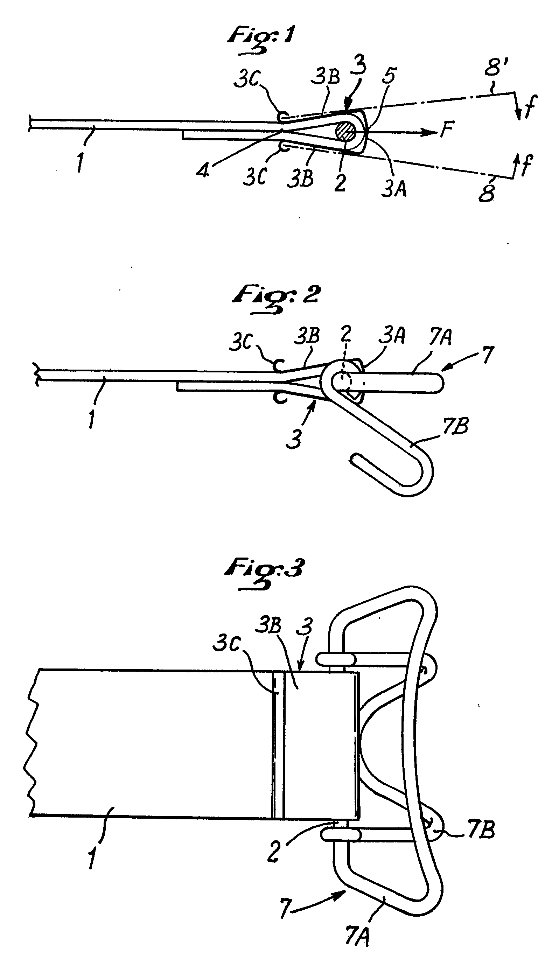

La figure 1 montre une sangle 1 formée par une bande plate en élastomère.

La sangle 1 est repliée à l'une de ses extrémités autour d'un axe cylindrique 2 solidaire d'une attache, de telle sorte que l'axe 2 est logé à l'intérieur du repli ainsi formé.

Une pince de serrage 3, élastique et comportant un dos arrondi 3A et deux ailes 3B vient coiffer à cheval le repli de la sangle 1 et l'axe 2 logé dans ledit repli. La pince 3 présente une largeur sensiblement égale à celle de la bande constituant la sangle 1, comme le montre plus particulièrement la figure 3.

La pince 3 comporte en outre à son extrémité des lèvres arrondies 3C, tournées vers l'extérieur.

Les ailes 3B de la pince convergent l'une vers l'autre à partir du dos 3A et créent par l'élasticité de la matière utilisée pour la pince, une zone de compression 4 à l'endroit des lèvres 3C.

On comprend aisément qu'une force selon la flèche F de la figure 1, appliquée sur l'axe 2 dans le plan de la sangle, l'autre extrémité de celle-ci étant maintenue et/ou une force opposée exercée sur la sangle, l'axe 2 étant maintenu, provoque une extension de ladite sangle.

Dans ce cas, la face externe du dos du repli de la sangle 1 vient se bloquer contre la face interne du dos 3A de la pince en créant une zone de pression 5 qui augmente l'effet de pincement des lèvres 3B sur la bande.

L'interaction des forces développées dans les zones 4 et 5 provoque un autoblocage du système.

Il est clair que l'axe 2 peut être solidaire de n'importe quel type d'attache et c'est pourquoi il est représenté sectionné sur la figure 1. Il peut s'agir par exemple d'une simple boucle ou d'un crochet, l'axe 2 étant fixé ou faisant partie intégrante de ladite boucle ou dudit crochet.

Les figures 2 et 3 montrent un mode de réalisation particulier.

L'attache référencée 7 comporte ici une poignée 7A munie de l'axe 2 disposé dans le repli de la sangle 1, tandis qu'un moyen d'accrochage sous forme d'un crochet 7B est articulé, comme le montrent les figures 2 et 3, autour de l'axe 2.

La poignée 7A facilite bien sûr la traction sur la sangle et rend plus aisé son accrochage.

Dans le mode de réalisation des figures 2 et 3, l'axe 2 appartient à la poignée 7A, mais il pourrait bien sûr faire partie intégrante du crochet 7B, la poignée 7A étant alors montée de manière articulée sur ledit axe 2 du crochet.

La description et les dessins décrivent un système de fixation d'une attache à l'une des extrémités d'une sangle, mais il est évident que la sangle peut être aussi munie d'une attache du même type ou d'un type différent à son autre extrémité.

Les multiples applications du système décrit ont déjà été évoquées. Il y a lieu toutefois de souligner de nouveau la souplesse d'utilisation. L'utilisateur peut en effet agir sur la longueur utile de la sangle par découpe de celle-ci, avant mise en place du système, et/ou par réglage de ce dernier.

Il est en effet très facile de modifier l'endroit du repli en desserrant la pince 3. Pour cela, il suffit par exemple d'exercer un effet de pince f, à l'aide de deux outils schématisés en lignes interrompues 8 et 8' à la figure 1. Les outils peuvent être spéciaux ou tout à fait quelconques puisqu'il suffit de faire levier comme le montre la figure 1, en s'accrochant à l'intérieur des lèvres 3C.

De cette manière, il est clair aussi qu'il est possible de choisir et de changer pour chaque application, le type d'attache désiré.

## Revendications

1) Procédé de fixation d'une attache à l'extrémité d'une sangle (1) en élastomère, caractérisé en ce qu'il consiste, à partir d' une bande plate en élastomère, à replier l'extrémité de ladite bande autour d'un axe cylindrique qui est solidaire de l'attache (7) à fixer et à coiffer le repli ainsi formé par une pince de serrage (3), élastique.

2) Système de fixation d'une attache (7) à l'extrémité d'une sangle en élastomère, caractérisé en ce qu'il comporte une pince de serrage (3), élastique, prévue pour venir coiffer un repli aménagé à l'extrémité de la sangle (1) autour d'un axe cylindrique (2) qui est solidaire de l'attache (7) à fixer.

3) Système selon la revendication 2, caractérisé en ce que la pince de serrage (3) présente un dos arrondi (3A) reliant deux ailes (3B) qui se resserrent l'une vers l'autre et qui sont terminées chacune par une lèvre (3C) arrondie s'enroulant vers l'extérieur.

4) Système selon l'une des revendications 2 et 3, caractérisé en ce que la pince de serrage (3) est en acier traité et l'attache (7) en métal ou en matière plastique dure.

5) Système selon l'une des revendications 2 à 4, caractérisé en ce que l'attache (7) comporte un moyen d'accrochage (7B) dont le profil est adapté à la pièce à laquelle la sangle doit s'accrocher.

6) Système selon la revendication 5, caractérisé en ce que l'axe cylindrique (2) autour duquel est aménagé le repli de la sangle est d'une seule pièce avec le moyen d'accrochage.

7) Système selon la revendication 6, caractérisé en ce que l'attache comporte en outre une poignée de traction qui est montée de manière articulée sur l'axe cylindrique du moyen d'acrochage.

8) Système selon la revendication 5, caractérisé en ce que l'attache (7) comporte en outre une poignée (7A) de traction, qui est munie de l'axe cylindrique (2) autour duquel est aménagé le repli de la sangle, tandis que le moyen d'accrochage (7B) est articulé sur l'axe (2) de ladite poignée (7A).

Fig: 1

Fig: 2

Fig: 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-C- 550 220 (DRÄGERWERK)<br>* Revendication; figures *<br>--- | 1,2,6 | A 44 B 11/00<br>F 16 B 2/24 |
| A | GB-A- 855 455 (F.T. PRODUCTS LTD)<br>* Revendications; figures *<br>--- | 1,2,4 | |
| A | FR-A- 586 399 (E. JOLY)<br>* Résumé; figures *<br>--- | 1,2,6 | |
| A | FR-A-2 149 002 (G. BENHAMOU)<br>* Figures *<br>--- | 3 | |
| A | DE-C- 80 314 (J. SCHWARZ)<br>* Figures *<br>----- | 7,8 | |

### DOMAINES TECHNIQUES RECHERCHES (Int. Cl.4)

A 44 B
F 16 B
A 45 C

Le présent rapport a été établi pour toutes les revendications

| Lieu de la recherche | Date d'achèvement de la recherche | Examinateur |
|---|---|---|
| LA HAYE | 26-04-1989 | BARTSCH A.W. |